# EUROPEAN PATENT APPLICATION

(11) **EP 4 389 573 A1**
(43) Date of publication of application: **26.06.2024**
(21) Application number: 23214764.5
(22) Date of filing: 06.12.2023
(51) Int. Cl.: B62H 3/08, B62H 3/04

(54) **BICYCLE RACK PROVIDED WITH A WHEEL GUTTER**

(30) Priority: 20.12.2022 NL 2033764; 29.09.2023 NL 2035934
(71) Applicant: Mecurity B.V., 5674 VN Nuenen (NL)
(72) Inventor: HAAN, de, Jan Wiebe, 5731 LW Mierlo (NL)
(74) Representative: Verhees, Godefridus Josephus Maria

(57) **Abstract**

A bicycle rack 1 has a wheel gutter 3, provided with a bottom 5 and an upright side wall 7, as well as a wheel bracket 9 provided with two legs 11 and 13. The wheel bearing surface 6 of the bottom 5 is at an angle 8 with respect to the side wall 7. Furthermore, one of the legs 11 of the wheel bracket 9 is located directly above the side wall 7. Due to the wheel bearing surface 6 sloping towards an edge of the wheel gutter 3, the wheel 103 will run sideways against the upright side wall 7 while the bicycle 101 is riding in the wheel gutter 3. Because the center of gravity of a bicycle is not in the middle, gravity will ensure that the wheel 103 will lean against the leg 11. This will cause the bicycle 101 to get upright in the bicycle rack 1 while riding in the bicycle rack 1.

## Description

### Technical field of the invention

The invention relates to a bicycle rack comprising:
- a wheel gutter provided with a bottom that is provided with a wheel bearing surface, and
- a wheel bracket that is present at one end of the wheel gutter and is connected to the wheel gutter and is provided with two legs between which a bicycle with part of a wheel can be placed, wherein on each side of the bottom of the wheel gutter one of the legs of the wheel bracket is connected to the wheel gutter.

### Background of the invention

Such a bicycle rack is generally known. In the well-known bicycle racks, the gutters have two side walls. Bicycle racks in which the most common bicycles can be placed must have a wheel gutter in which tires with a width ranging from ⅞ to 2¼ inches can be placed. If a bicycle with a narrow tire of ⅞ inch is placed in such a bicycle rack, the bicycle usually comes to an angle, wherein the part of the wheel present in the wheel gutter being in contact with one of the side walls of the wheel gutter and at a distance above the wheel gutter the wheel is in contact with a leg of the wheel bracket that is attached to the other side wall of the wheel gutter.

### Summary of the invention

An object of the invention is to provide a bicycle rack of the type described in the opening paragraph in which the bicycle placed therein is always upright. To this end, the bicycle rack according to the invention is characterized in that, viewed in cross-section of the wheel gutter, part of the wheel bearing surface of the bottom of the wheel gutter at the location of the wheel bracket is at an angle between 60 and 85 degrees relative to one of the legs of the wheel bracket. As a result, the wheel of a bicycle is guided against the side wall of the wheel gutter through the sideways sloping bottom of the wheel gutter while riding in the wheel gutter. Because the center of gravity of a bicycle is not in the center of the bicycle due to the presence of the drive chain on one side of the center, and by ensuring that the side wall of the wheel gutter is located on that side of the bicycle where the center of gravity is located, the bicycle will furthermore lean against the leg of the bracket that is directly above this side wall. As a result, the bicycle will stand upright in the bicycle rack while riding in the bicycle rack and will not tilt to the other side.

The legs of the wheel bracket are preferably perpendicular to the wheel bearing surface of the bottom, but can also be at an angle of a maximum of 10 degrees with the vertical direction.

In order to let a bicycle be more stable in the bicycle rack, an embodiment of the bicycle rack according to the invention is characterized in that a wheel bracket is present at both ends of the wheel gutter, with a part of the wheel bearing surface at the location of each wheel bracket being at an angle between 60 and 85 degrees to one of the legs of the wheel bracket.

A bicycle can be even more stable in the bicycle rack in a further embodiment which is characterized in that the said parts of the wheel support surface are inclined in opposite directions.

Yet another embodiment of the bicycle rack according to the invention is characterized in that the wheel gutter is provided with at least one side wall that is attached to the bottom and is located at least at the location of the leg of the wheel bracket is opposite the angled part of the wheel support surface. By supporting the wheel against a side wall instead of or in addition to a leg of a wheel bracket, the bicycle becomes even more stable in the wheel gutter.

The wheel gutter may also be provided with two side walls which are attached to the bottom at opposite side edges of the bottom and are each located at least at the location of the leg of the wheel bracket opposite the angled part of the wheel bearing surface.

A further embodiment of the bicycle rack according to the invention is characterized in that the side wall of the wheel gutter is at least 50 mm high. Because the wheel is in contact with the side wall over the entire height of the side wall, the bicycle will be held upright by the wheel gutter alone.

The side wall of the wheel gutter is preferably oriented vertically, but since a slight tilt of the bicycle is permissible, the side wall of the wheel gutter may also be at a small angle of maximum 5 degrees with respect to the vertical direction.

The wheel bracket of the bicycle rack preferably comprises a U-shaped part, wherein the legs of the U-shape form a first part of the legs of the wheel bracket and wherein the legs of the wheel bracket each comprise a second part that is at an angle with the first part and that at one end is connected to the wheel gutter.

Yet another embodiment of the bicycle rack according to the invention is characterized in that the bicycle rack comprises a pressure strip that is connected to the wheel bracket, wherein the horizontal distance at the location of the bottom between a free end of the pressure strip and the side wall of the wheel gutter at the bottom is less than 20 mm. This pressure strip supports pressing the wheel of the bicycle against the upright side wall and against the first part of the leg of the wheel bracket on that side, so that the bicycle remains upright in an even more stable position.

Yet another embodiment of the bicycle rack according to the invention is characterized in that the first parts of the legs have different lengths and the pressure strip is attached to the second part of the leg of which the first part is the longest. By pressing the wheel against the shortest first part of the legs of the wheel bracket and ensuring that this first part is not too long, the spokes of the wheel are prevented from coming into contact with the wheel bracket, which would cause the bicycle to become slightly crooked. Furthermore, in this embodiment a longer pressure strip can also be used so that it can be pressed away more easily by the wheel of the bicycle and less force is required to push the bicycle into the wheel bracket.

### Brief description of the drawings

The invention will be further elucidated below on the basis of drawings. These drawings show an embodiment of the bicycle rack according to the present invention. In the drawings:
Figure 1 shows a first embodiment of the bicycle rack according to the invention with a bicycle placed therein, seen in right side view;
Figure 2 shows the situation shown in figure 1, but now seen in a left view;
Figure 3 shows the situation shown in figure 1, but now seen in front view;
Figure 4 shows a detail of the situation shown in Figure 3 at the location of the wheel gutter;
Figure 5 shows the bicycle rack with the bicycle placed therein in perspective;
Figure 6 shows a detail of the situation shown in Figure 5 at the location of the wheel gutter,
Figure 7 shows a second embodiment of the bicycle rack according to the invention in perspective;
Figure 8 is a top view of the bicycle rack shown in Figure 7; and
Figure 9 shows a side view of the bicycle rack shown in figure 7.

### Detailed description of the drawings

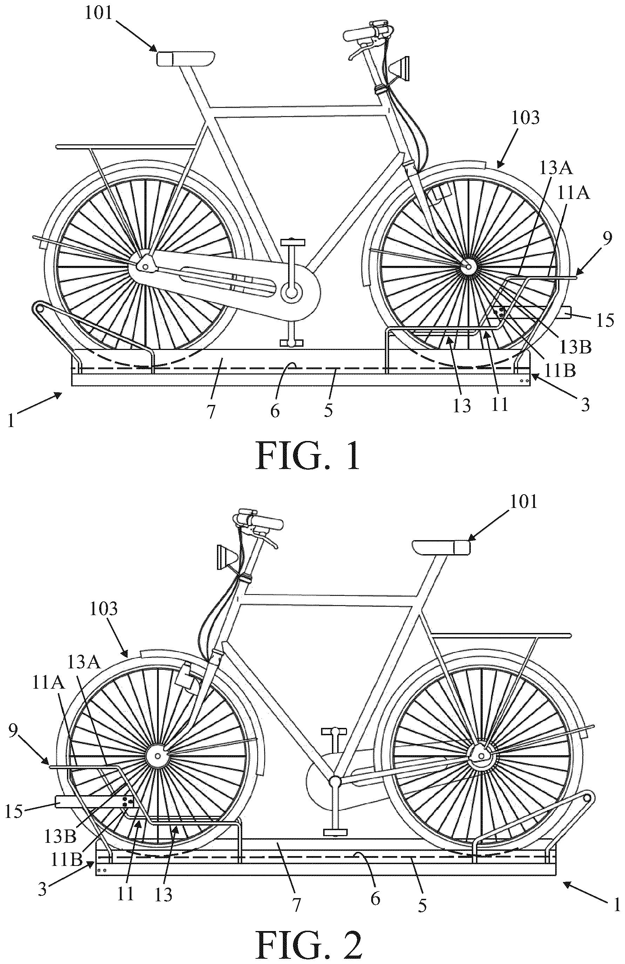

Figures 1 and 2 show a first embodiment of the bicycle rack according to the invention with a bicycle 101 placed therein in right and left side views, respectively. The bicycle rack 1 has a wheel gutter 3 provided with a bottom 5 and at least one side wall 7 that is attached to the bottom 5. The bottom 5 is provided with a wheel bearing surface 6 on which the wheel 103 of the bicycle 101 is present. The bicycle rack furthermore has a wheel bracket 9 which is connected to the wheel gutter 3 and is provided with two legs 11 and 13 between which the wheel 103 of the bicycle 101 is present. On each side of the bottom 5 of the wheel gutter 3, one of the legs 11 and 13 of the wheel bracket 9 is connected to the wheel gutter 3.

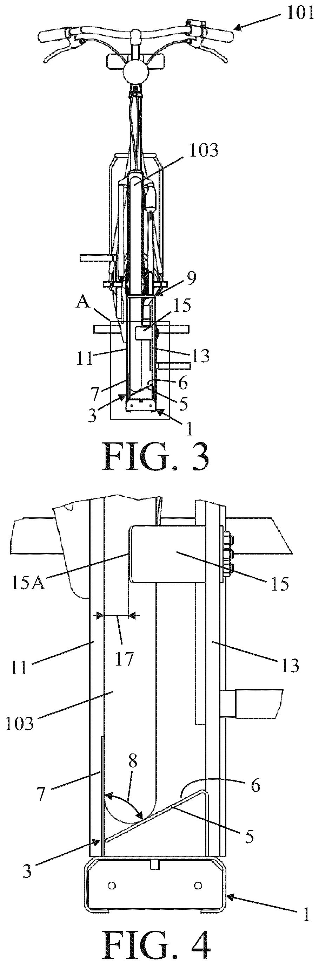

Figure 3 shows the bicycle rack 1 with the bicycle 101 placed therein in front view and figure 4 shows a detail A thereof at the location of the wheel gutter 3. The wheel bearing surface 6 of the bottom 5 of the wheel gutter 3, seen in cross-section of the wheel gutter 3, is at an angle 8 between 60 and 85 degrees with respect to the vertically oriented side wall 7 of the wheel gutter 3. Furthermore, one of the legs 11 of the wheel bracket 9 is located directly above the side wall 7.

Due to the wheel bearing surface 6 of the bottom 5 sloping towards an edge of the wheel gutter 3, the wheel 103 of the bicycle 101 will run sideways against the upright side wall 7 of the wheel gutter 3 while driving in the wheel gutter 3. Because the center of gravity of a bicycle is on that side of the bicycle where the drive chain is located, gravity will furthermore ensure that the wheel 103 of the bicycle 101 will lean against the leg 11 of the bracket 9, which is located directly above the side wall 7. As a result, while riding in the bicycle rack 1, the bicycle 101 will get upright in the bicycle rack 1 and will not tilt to the other side.

The height of the side wall 7 of the wheel gutter 3 is 50 mm or more. This means that the wheel and tire are in contact with the side wall over the entire height, so that the bicycle is held upright only by the wheel gutter.

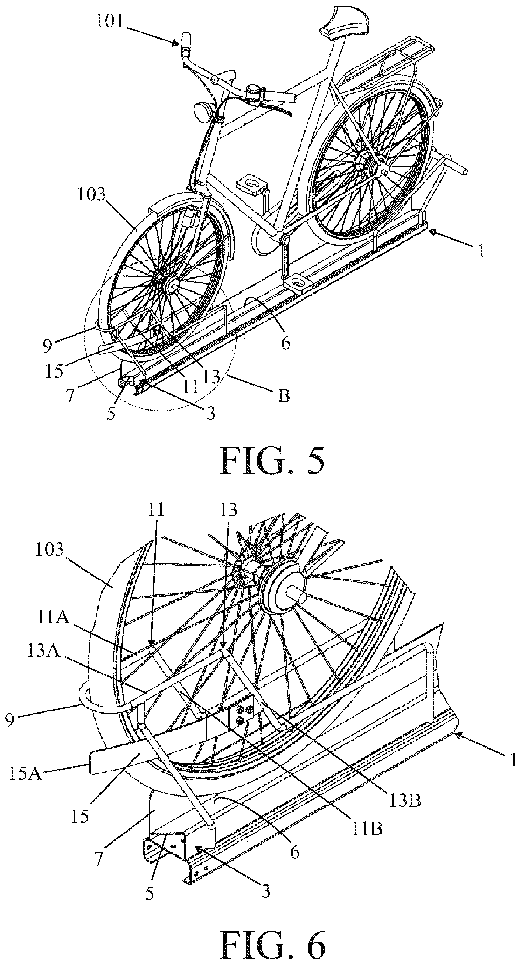

Figure 5 shows the bicycle rack with the bicycle placed therein seen in perspective and Figure 6 shows a detail B of this at the location of the wheel gutter. The wheel bracket 9 has a horizontal U-shaped part, the legs of which form first parts 11A and 13A of the legs 11 and 13 of the wheel bracket 9. The legs 11 and 13 of the wheel bracket 9 each further have a second part 11B and 13B respectively, which is at an angle with the first parts 11A and 13A and is directed downwards towards the gutter. These second parts 11B and 13B of the wheel bracket 9 are each connected at one end to a side of the wheel gutter 3.

The bicycle rack 1 further has a pressure strip 15 that is connected to the wheel bracket 9. The horizontal distance 17 between a free 15A end of the pressure strip 15 and the side wall 7 of the wheel gutter 3 at the location of the bottom 5 is less than 20 mm (see figure 4) so that bicycles with narrow tires can also be placed upright in the bicycle rack 1.

The first parts 11A and 13A of the legs 11 and 13 of the wheel bracket 9 have a different length. The pressure strip 15 is attached to the second part 13B of the leg 13, of which the first part 13A is the longest. This makes it possible to use a long pressure strip 15, which can easily be pressed away by the wheel 103 of the bicycle 101, so that little force is required to push the bicycle 101 into the wheel bracket 9. The wheel 103 is pressed against the shortest first part 11A of the legs of wheel bracket 9 so that the spokes of the wheel 103 do not come into contact with the wheel bracket 9 and the bicycle 101 can stand upright.

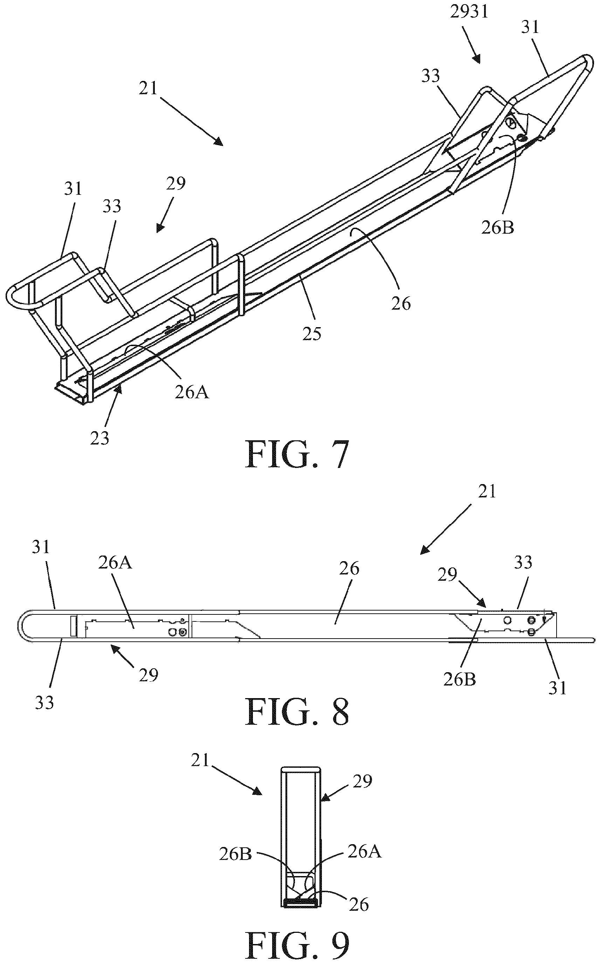

Figure 7 shows a second embodiment of the bicycle rack according to the invention. This bicycle rack 21 also has a wheel gutter 23 provided with a bottom 25 which is provided with a wheel bearing surface 26. This bicycle rack 21 further has two wheel brackets 29 which are connected to the wheel gutter 23 and each are provided with two legs 31 and 33. The wheel bearing surface 26 of the bottom 25 of the wheel gutter 23, at the location of the wheel brackets 29, seen in cross-section of the wheel gutter 23, are again at an angle between 60 and 85 degrees with respect to the vertically oriented legs of the wheel brackets. A bicycle placed in this bicycle rack 21 will be pressed both with the front wheel and the rear wheel in opposite directions against one of the legs of the bicycle brackets, making the bicycle stable.

For clarification, figure 8 shows the bicycle rack 21 in top view and figure 9 shows the bicycle rack 21 in side view.

Although the present invention is elucidated above on the basis of the given drawings, it should be noted that this invention is not limited whatsoever to the embodiments shown in the drawings. The invention also extends to all embodiments deviating from the embodiments shown in the drawings within the scope of the invention defined by the appended claims.

## Claims

1. Bicycle rack (1; 21) comprising:
- a wheel gutter (3; 23) provided with a bottom (5; 25) that is provided with a wheel bearing surface (6; 26), and
- a wheel bracket (9; 29) that is present at one end of the wheel gutter (3; 23) and is connected to the wheel gutter (3; 23) and is provided with two legs (11, 13; 31, 33) between which a bicycle (101) with part of a wheel (103) can be placed, wherein on each side of the bottom (5; 25) of the wheel gutter (3; 23) one of the legs (11, 13; 31, 33) of the wheel bracket (9; 29) is connected to the wheel gutter (3; 23),
**characterized in that**, viewed in cross-section of the wheel gutter (3; 23), part of the wheel bearing surface (6; 26) of the bottom (5; 25) of the wheel gutter (3; 23) at the location of the wheel bracket ( 9; 29) is at an angle (8) between 60 and 85 degrees relative to one of the legs (11; 31) of the wheel bracket (9; 29).

2. Bicycle rack (21) according to claim 1, **characterized in that** at both ends of the wheel gutter (23) a wheel bracket (29) is present, wherein at the location of each wheel bracket (29) a part of the wheel bearing surface (26) is at an angle between 60 and 85 degrees with respect to one of the legs (31) of the wheel bracket (29).

3. Bicycle rack (23) according to claim 2, **characterized in that** said parts of the wheel support surface (26) slope in opposite directions.

4. Bicycle rack (1) according to claim 1, 2 or 3, **characterized in that** the wheel gutter (3) is provided with at least one side wall (7) that is attached to the bottom (5) and is located at least at the location of the leg of the wheel bracket is opposite the angled part of the wheel support surface (6).

5. Bicycle rack according to claim 3, **characterized in that** the wheel gutter is provided with two side walls (7) which are attached to the bottom (5) at opposite side edges of the bottom and each extend at least at the location of the leg of the wheel bracket opposite the angled part of the wheel support surface (6).

6. Bicycle rack according to claim 4 or 5, **characterized in that** the side wall (7) or the side walls of the wheel gutter (3) is/are at least 50 mm high.

7. Bicycle rack according to claim 4, 5 or 6, **characterized in that** the side wall (7) of the wheel gutter (3) is vertically oriented or at an angle of maximum 5 degrees with respect to the vertical direction.

8. Bicycle rack according to any one of the preceding claims, **characterized in that** at least one of the wheel brackets (9) comprises a U-shaped part, wherein the legs of the U-shape form a first part (11A, 13A) of the legs (11, 13) of the wheel bracket (9) and wherein the legs (11, 13) of the wheel bracket (9) each comprise a second part (11B, 13B) that is at an angle with the first part (11A, 13A) and that with an end is connected to the wheel gutter (3).

9. Bicycle rack according to claim 8, **characterized in that** the bicycle rack (1) comprises a pressure strip (15) connected to the wheel bracket (9), wherein the horizontal distance (17) at the location of the bottom (5) between a free (15A) end of the pressure strip (15) and the opposite side wall (7) of the wheel gutter (3) or leg of the wheel bracket (9) is smaller than 20 mm.

10. Bicycle rack according to claim 8 or 9, **characterized in that** the first parts (11A, 13A) of the legs (11, 13) have different lengths and the pressure strip (15) is attached to the second part (13B) of the leg (13) of which the first part (13A) is the longest.
